# EUROPEAN PATENT SPECIFICATION

(11) **EP 2 652 203 B1**
(45) Date of publication and mention of the grant of the patent: **11.03.2015**
(21) Application number: 11805998.9
(22) Date of filing: 12.12.2011
(51) Int. Cl.: E02B 8/08, A01K 61/00, A01K 79/02

(54) **SCREEN FOR CONTROLLING THE MIGRATION OF FISH IN A FLOWING STREAM SUCH AS A RIVER**
SIEB ZUR STEUERUNG DER MIGRATION VON FISCHEN IN EINEM FLIESSENDEN STROM WIE ETWA EINEM FLUSS
GRILLE POUR CONTRÔLER LA MIGRATION DE POISSONS DANS UN COURS D'EAU TEL QU'UNE RIVIÈRE

(30) Priority: 13.12.2010 NO 20101747
(43) Date of publication of application: 23.10.2013
(73) Proprietor: Biosort AS, 1360 Fornebu (NO)
(72) Inventor: SAUGEN, Bernt, N-1350 Lommedalen (NO); IDSØ, Svein, Tore, N-0175 Oslo (NO)
(74) Representative: Onsagers AS
(86) International application number: PCT/NO2011/000343
(87) International publication number: WO 2012/081990

(56) References cited:
- EP-A2- 2 098 640
- CA-A1- 2 343 875
- DE-A1-102008 012 719
- DE-U1-202005 019 791
- US-A1- 2008 078 331

## Description

The invention relates to a screen for controlling the migration of fish, in particular salmon, in a flowing stream.

The population of wild salmon in the North Atlantic and Pacific Ocean is threatened by a number of environmental challenges. According to the report of 2010 of the Norwegian "Norwegian Scientific Advisory Committee for Atlantic Salmon Management", genetic deterioration is the factor with potentially largest effect on the population of wild salmon. Genetic deterioration occurs due to interbreeding between wild and escaped farmed salmon, when escaped farmed salmon migrates up rivers.

There is thus a need for technical installations which classify the fish migrating up rivers to spawn, and to sort out individuals which are recognized as farmed fish. Such installations may comprise a screen in the river for guiding the approaching fish into the system, a recording unit and a sorting unit.

US 1999637 describes a screen with a locking mechanism for use in a waterway. The screen is normally locked in an operative position. The lock can release when a sufficient large load presses against the screen, whereupon the screen moves to an open position. The screen will protrude over the water surface when there is low water and in this case, the release mechanism will have reduced effect.

DE 202005019791 U1 describes a grate arranged in the outlet channel from a water power plant to prevent fish from swimming into the outlet. The grate comprises flexible rods connected to a revolving bar at the bottom of the outlet channel. The rods protrude ca. 20 cm up from the water surface and the height is adjusted by means of separate pontoons arranged on a pole angled opposite from the grate rods and which is rotated by means of a cogwheel at the pontoon pole and the grate rods.

US 2008078331 describes a weir door for use with a filtration unit enclosure of an artificial body of water, comprising a panel having opening for permitting water passage there through and fish deterrent means covering said opening for deterring passage of fish there through. The weir door is rigid, buoyant, and has one, single pivotally connection to the filtration unit enclosure. The deterrent means comprises an array of spiked members.

DE 10 2008012719 describes a prior art fish guard for flowing water.

A well designed screen is important in such a system in order to secure a cost effective solution and the acceptance for the intervention in nature which is caused by the installation of the system. The screen is adapted to close the river for the swimming fish and to guide the fish to the recording and sorting units, from which the fish are let out to continue swimming up the river. The screen should provide as little intervention as possible in the nature and be as discrete as possible. The screen should also be able to withstand flooding and be able to get rid of refuse/ permit free passage of debris in order to prevent congestion of the river and/or poor effect of the screen, as well as not being harmed by the forces from moving debris.

The object of the invention is to provide a screen which fulfils the above mentioned criteria. The object of the invention is achieved by means of the features of the patent claims.

The screen according to the invention comprises the technical features of claim 1. Preferred embodiments are set out in the dependent claims.

The screen is adapted to be used in any flowing stream, such as small or large rivers or other water ways where fish will swim up or down the stream. The stream flows over a bottom and has a water surface above the bottom which is varying in height depending on the amount of water in the stream, varying with amount of rain, snow and temperature. The underwater anchoring device is any kind of suitable device which is able to maintain the screen in a position close to the bottom of the flowing stream. In one embodiment the anchoring device is an object which is heavy enough to stay stationary on the bottom. The anchoring device may also comprise anchoring means for connecting to the bottom, such as spikes or studs for penetrating into the bottom or the anchoring device may be shaped to force itself into the upper layer of the bottom. The anchoring means may in one embodiment comprise elements for attaching to the river banks and comprise connection means for maintaining the bottom of the screen close to the bottom of the stream. The connection means mav for example be a wire, beam or other suitable means. The anchoring means may comprise a combination of elements on the bank and at the bottom of the stream. The guiding elements are shaped to provide as little influence as possible on the water stream. In one embodiment the guiding elements are longitudinal elements having a smooth surface. The longitudinal elements may be arranged side by side in parallel and thus constitutes a fence-shaped device. The number of guiding elements is chosen according to the need, for example according to the width of the river or the part of river to be screened. The length of the guiding elements should be adapted to the water level and should be prepared for flooding.

In one embodiment the guiding elements are straight bars/beams having smooth surfaces.

The smooth surface of the guiding elements enables residues/refuse/debris or drift wood floating down the stream to slide on the guiding elements thus avoiding entanglement with the screen.

In one embodiment the guiding elements comprise an end section which is angled with respect to the longitudinal direction of the guiding elements. This may be provided as a separate part or may be an integrated part of the guiding elements. The guiding elements are connected at one end to the anchoring device, for example by means of ropes, chains, screws, etc. In one embodiment the guiding elements are releasably connected to the anchoring device to enable the screen to be easily detached and re installed, for example for enabling detachment and removal of the screen during winter time.

The connection between the guiding elements and the anchoring device is a pivotal connection which allows the guiding elements to swing with respect to the anchoring device at least in a vertical plane that is parallel to the streaming direction (of flow) of the water. This means that the guiding elements are allowed to have at least some angular movement around the connection to the anchoring device. In one embodiment, the guiding elements may swing freely around the connection point.

The connection between the guiding elements and the anchoring device may be a swan socket or other suitable socket. In one embodiment the guiding elements are connected to the anchoring device by means of an adapter, for example a beam connecting all guiding elements, which have a connecting interface for connecting to the anchoring device. The pivotal connection can be achieved by the connection itself, for example by a more or less flexible connection or the guiding elements being flexible at least near the end connected to the anchoring device, or by other active or passive means.

In one embodiment the guiding elements are connected to the anchoring device by means of a hinge device.

According to the invention, the guiding elements are rotatable independent of the other guiding elements. Some of the guiding elements may be connected together to groups of guiding elements comprising two, three or more guiding elements in each group, in which case each group of guiding elements may be rotatable independently of the other groups of guiding elements.

The ascending means are elements, devices or mechanisms that cause the guiding elements to rise in the water. The purpose of the ascending means is to keep the upper end (the end not connected to the anchoring device) of the guiding elements near, or flush with the water surface. The ascending elements provide an upwards acting force on the guiding elements in order to achieve this purpose.

In one embodiment the ascending means are buoyancy elements. In another embodiment the ascending means may be a hydrofoil or wing which provides lift/lifting forces on the guiding elements due to the flowing waters. The lift will increase as the water flowing speed increases, thus ensuring that the guiding elements are maintained near the water surface. Other possible ascending means are pumps, suction or other ejector mechanisms for emptying hollow guiding elements in order to provide increased buoyancy, springs, or hydraulic, pneumatic or electromechanical actuators which cause the guiding elements to rise in the water. The ascending means may also be or comprise a combination of any of the above described means or mechanisms.

In one embodiment, the guiding elements constitute buoyancy elements. This may be embodied by making the guiding elements or parts/sections of the guiding elements from a buoyant material, such as wood, plastic, or the guiding elements may be hollow and contain air or a foam structure. For a hollow guiding element the construction material may be for example aluminium, steel, thermo plastic, polyester, etc. In another embodiment, one or several buoyancy elements are attached to the guiding elements.

The buoyancy of the buoyancy elements is in one embodiment adapted to ensure that the guiding elements float near the water surface. The buoyancy may further be adapted to enable the guiding elements to be pressed downwards to the extent that refuse may be allowed to float over the guiding elements. When such refuse has passed the guiding elements, the buoyancy will force the guiding elements upwards to the surface of the water. This may also be achieved by means of other types of ascending means, by adapting the upwards acting force to this.

The invention will now be described in more detail by means of an example and by reference to the accompanying figures.
Figure 1 shows a schematic example of a screen according to the invention.
Figure 2 shows another example of a screen according to the invention
Figure 3 illustrates a screen according to the invention in use.
Figure 4 shows floating debris passing over the screen shown in figure 3.

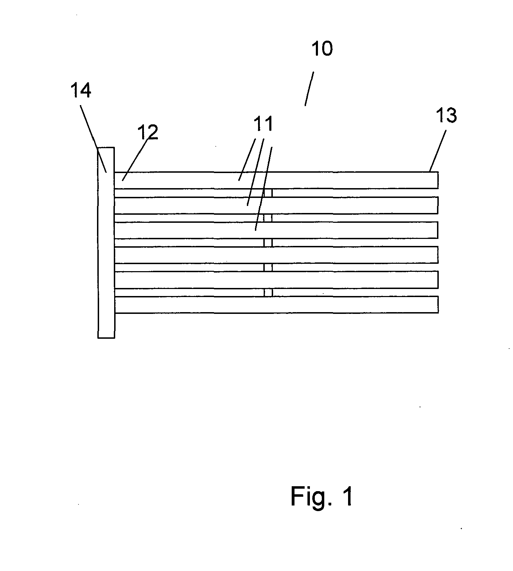

In figure 1 a screen 10 for controlling the migration of fish in a flowing stream such as a river is exemplified. The screen 10 comprises a number of guiding longitudinal elements 11 having two ends 12, 13 and ascending means. The guiding elements 11 are in this embodiment shaped as beams. The guiding elements 11 are connected to an underwater anchoring device 14 at the first end 12. The connection to the anchoring device 14 is a pivotal connection which allows the guiding elements 11 to swing at an angle round the connection to the anchoring device, thus enabling the other, upper end 13, of the guiding elements to keep near the water surface when the water level changes, while the first end 12 is stationary at the bottom. The anchoring device 14 is adapted to be anchored to the bottom of the flowing stream to keep the screen at the desired location.

The ascending means may in this embodiment be buoyancy elements, for example by producing the guiding elements of a buoyant material.

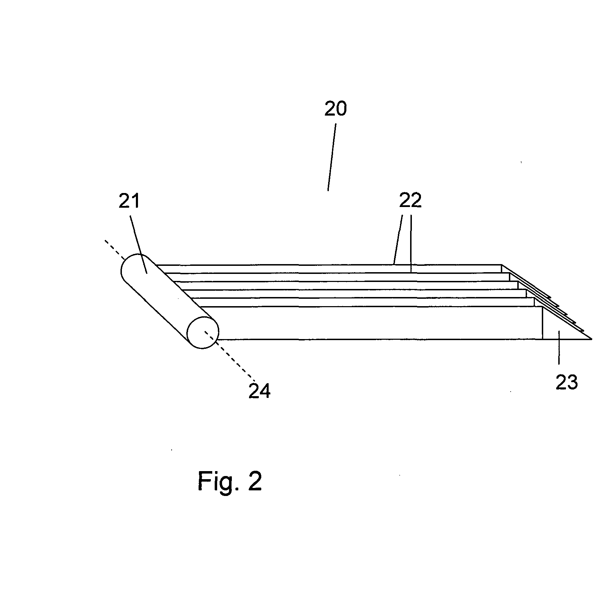

Figure 2 shows an embodiment of a screen 20 according to the invention where the guiding elements 22 comprise an end section 23. The end section 23 is angled with respect to the longitudinal direction of the guiding elements. The angled end section will facilitate that refuse or drift wood can pass the screen. The end sections 23 can be integrated in the guiding elements 22 by producing guiding elements 22 and end sections 23 from the same piece of material, or the end sections 23 may be separate elements which are connected to the guiding elements 22. In this embodiment, there is provided a hinge device 21 to which the guiding elements 22 are connected and which can be connected to an anchoring device, thus providing the pivotal connection between the guiding elements 22 and the anchoring device (not shown). The guiding elements 22 are thus allowed to pivot round the longitudinal axis 24 of the hinge device 21.

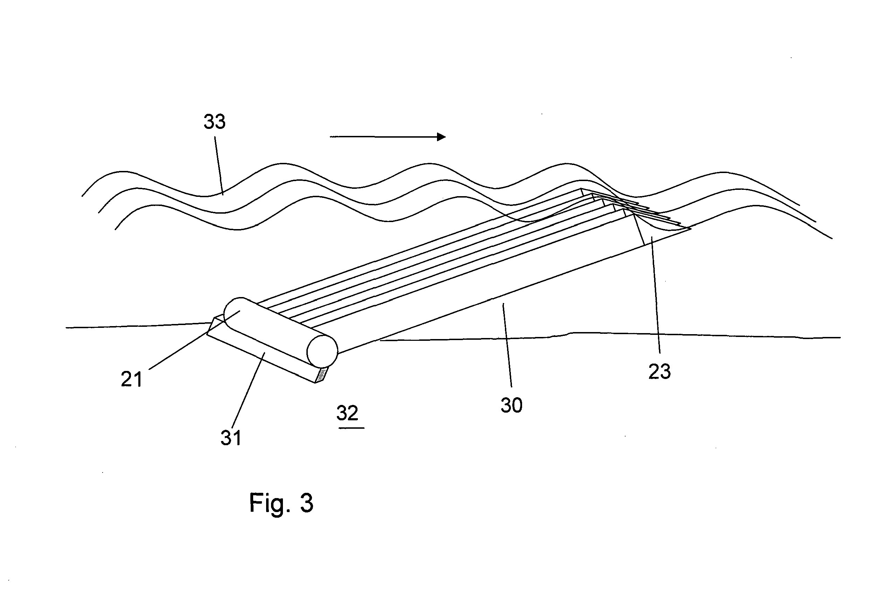

Figure 3 illustrates a screen 30 according to the invention when placed in a river having a river bottom 32 and a water surface 33. The water flows in the direction of the arrow. The screen 30 is similar to the screen of figure 2. The hinge device 21 is connected to an anchoring device 31 which is anchored to the river bottom 32. The ascending means causes the guiding elements to rise in the water until the end sections 23 of the guiding elements are near the water surface 33.

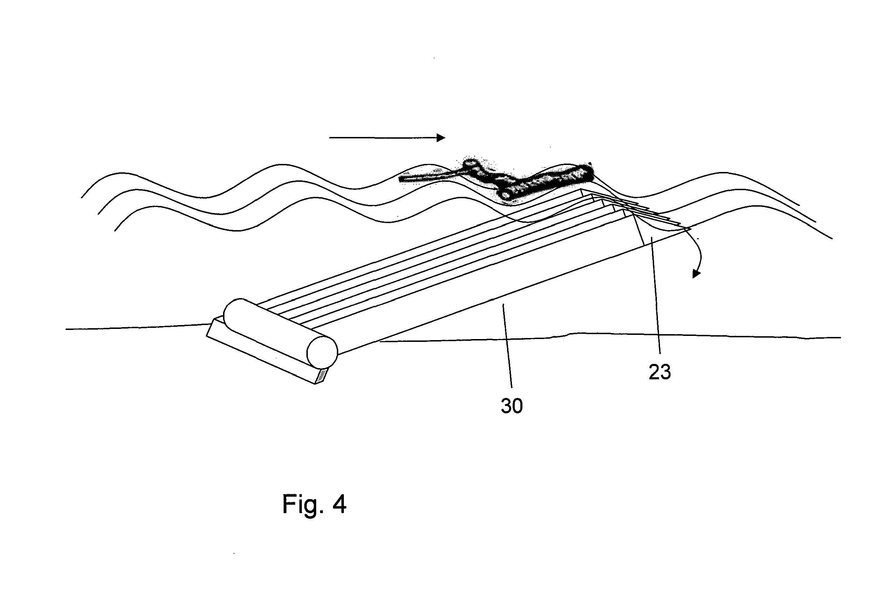

Figure 4 illustrates the effect of the angled end sections 23 of the guiding elements and how the screen 30 can be pressed downwards to let refuse or drift wood to pass the screen.

## Claims

1. Screen (10, 20, 30) for controlling the migration of fish in a flowing stream such as a river,
**characterized in that** the screen comprises:
- an underwater anchoring device (14, 31) for anchoring close to the bottom of the flowing stream,
- a number of buoyant guiding elements (11, 22) constituting ascending means, the guiding elements having two ends (12, 13), one end (12) being pivotally connected to the underwater anchoring device for rotation in a generally vertical plane parallel to the direction of the flow of the stream, and the guiding elements being rotatable independent of the other guiding elements.

2. Screen according to claim 1, **characterized in that** at least two and two guiding elements (11, 22) are connected to make separate groups of guiding elements.

3. Screen according to claim 2, **characterized in that** each group of guiding elements (11, 22) is rotatable independently of the other guiding elements.

4. Screen according to claim 1, **characterized in that** the buoyancy of the guiding elements (11, 22) is adapted to ensure that the other ends of the guiding elements float near the water surface (33).

5. Screen according to claim 1, **characterized in that** the guiding elements (11, 22) are longitudinal elements or bars having a smooth surface.

6. Screen according to claim 1, **characterized in that** the guiding elements (11, 22) are connected to the anchoring device (14) by means of a hinge device (21).

7. Screen according to claim 1, **characterized in that** the guiding elements (11, 22) are releasably connected to the anchoring device (14, 31) to enable the screen to be easily detached and re installed.

8. Screen according to claim 1, **characterized in that** the guiding elements (11, 22) include at their other ends an end section (23) which is angled with respect to the longitudinal direction of the guiding elements.

## Patentansprüche

1. Sieb (10, 20, 30) zum Steuern der Migration von Fischen in einem strömenden Strom wie einem Fluss,
**dadurch gekennzeichnet, dass** das Sieb aufweist:
eine Unterwasserverankerungsvorrichtung (14, 31) zum Verankern nahe einem Untergrund des strömenden Stroms,
eine Anzahl von Schwimmführungselementen (11, 22), die aufsteigende Mittel bilden, wobei die Führungselemente zwei Enden (12, 13) aufweisen, wobei ein Ende (12) für eine Drehung in einer im Wesentlichen vertikalen Ebene parallel zur Richtung der Strömung des Stroms schwenkbar mit der Unterwasserverankerungsvorrichtung verbunden ist, und wobei die Führungselemente unabhängig von den anderen Führungselementen drehbar sind.

2. Sieb gemäß Anspruch 1, **dadurch gekennzeichnet, dass** zumindest zwei und zwei Führungselemente (11, 22) verbunden sind, um separate Gruppen von Führungselementen bereitzustellen.

3. Sieb gemäß Anspruch 2, **dadurch gekennzeichnet, dass** jede Gruppe der Führungselemente (11, 22) unabhängig von den anderen Führungselementen drehbar ist.

4. Sieb gemäß Anspruch 1, **dadurch gekennzeichnet, dass** die Schwimmfähigkeit der Führungselemente (11, 12) angepasst wird, um sicherzustellen, dass die anderen Enden der Führungselemente nahe der Wasseroberfläche (33) schwimmen.

5. Sieb gemäß Anspruch 1, **dadurch gekennzeichnet, dass** die Führungselemente (11, 22) longitudinale Elemente oder Stangen sind, die eine glatte Oberfläche aufweisen.

6. Sieb gemäß Anspruch 1, **dadurch gekennzeichnet, dass** die Führungselemente (11, 22) mittels einer Gelenkvorrichtung (21) mit der Verankerungsvorrichtung (14) verbunden sind.

7. Sieb gemäß Anspruch 1, **dadurch gekennzeichnet, dass** die Führungselemente (11, 22) abnehmbar mit der Verankerungsvorrichtung (14, 31) verbunden sind, damit das Sieb leicht abgenommen und wieder installiert werden kann.

8. Sieb gemäß Anspruch 1, **dadurch gekennzeichnet, dass** die Führungselemente (11, 22) an ihren anderen Enden eine Endsektion (23) aufweisen, die bezüglich der Longitudinalrichtung der Führungselemente abgewinkelt sind.

## Revendications

1. Grille (10, 20, 30) destinée à réguler la migration de poissons dans un courant en écoulement tel qu'un cours d'eau,
**caractérisée en ce que** la grille comprend :
- un dispositif d'ancrage sous-marin (14, 31) destiné à s'ancrer à proximité du fond du courant en écoulement,
- un certain nombre d'éléments de guidage flottants (11, 22) constituant des moyens ascendants, les éléments de guidage ayant deux extrémités (12, 13), une extrémité (12) étant raccordée de façon pivotante au dispositif d'ancrage sous-marin pour tourner dans un plan généralement vertical parallèle à la direction de l'écoulement du courant, et les éléments de guidage pouvant tourner indépendamment des autres éléments de guidage.

2. Grille selon la revendication 1, **caractérisée en ce qu'**au moins deux et deux éléments de guidage (11, 22) sont raccordés pour créer des groupes séparés d'éléments de guidage.

3. Grille selon la revendication 2, **caractérisée en ce que** chaque groupe d'éléments de guidage (11, 22) peut tourner indépendamment des autres éléments de guidage.

4. Grille selon la revendication 1, **caractérisée en ce que** la flottabilité des éléments de guidage (11, 22) est adaptée pour garantir que les autres extrémités des éléments de guidage flottent à proximité de la surface de l'eau (33).

5. Grille selon la revendication 1, **caractérisée en ce que** les éléments de guidage (11, 22) sont des éléments ou barres longitudinaux ayant une surface lisse.

6. Grille selon la revendication 1, **caractérisée en ce que** les éléments de guidage (11, 22) sont raccordés au dispositif d'ancrage (14) au moyen d'un dispositif de charnière (21).

7. Grille selon la revendication 1, **caractérisée en ce que** les éléments de guidage (11, 22) sont raccordés de façon amovible au dispositif d'ancrage (14, 31) pour permettre à la grille d'être facilement détachée et réinstallée.

8. Grille selon la revendication 1, **caractérisée en ce que** les éléments de guidage (11, 22) incluent au niveau de leurs autres extrémités une section d'extrémité (23) qui est inclinée par rapport à la direction longitudinale des éléments de guidage.
